# FASCICULE DE BREVET EUROPEEN

(11) **EP 3 769 605 B1**
(45) Date de publication et mention de la délivrance du brevet: **30.03.2022**
(21) Numéro de dépôt: 20186425.3
(22) Date de dépôt: 17.07.2020
(51) Int. Cl.: A01D 89/00

(54) **DISPOSITIF DE RAMASSAGE POUR MACHINE DE TRAITEMENT DE VÉGÉTAUX COUPÉS ET MACHINE CORRESPONDANTE**
AUFNAHMEVORRICHTUNG FÜR MASCHINE ZUR VERARBEITUNG VON PFLANZENSCHNITT, UND ENTSPRECHENDE MASCHINE
COLLECTING DEVICE FOR A MACHINE FOR TREATING CUT PLANTS AND CORRESPONDING MACHINE

(30) Priorité: 22.07.2019 FR 1908276
(43) Date de publication de la demande: 27.01.2021
(73) Titulaire: Kuhn SAS, 67700 Saverne (FR)
(72) Inventeur: GANTZER, Christian, 57915 WOUSTVILLER (FR); SCHWER, Mickaël, 57370 BOURSCHEID (FR)
(74) Mandataire: Cabinet Nuss

(56) Documents cités:
- EP-A1- 1 976 370
- EP-B1- 1 976 370
- US-A- 1 877 519
- US-A- 3 226 921

## Description

La présente invention concerne le domaine du machinisme agricole, plus particulièrement les machines agricoles de traitement de végétaux coupés destinés par exemple au ramassage, à l'andainage, au fanage et/ou au compactage en balle de végétaux coupés gisant sur le sol. Ces machines de récolte sont équipées d'un dispositif de ramassage qui prélève les végétaux coupés gisant sur le sol lors de la locomotion de la machine dans un sens d'avance. Un tel dispositif de ramassage est, par exemple, du type connu sous l'appellation « pick-up » dans le domaine agricole.

Dans ce contexte, l'invention a pour principaux objets un dispositif de ramassage amélioré et une machine agricole du type ci-dessus avec un tel dispositif de ramassage amélioré.

Les machines de traitement (automotrices ou tractées) concernées par la présente solution comportent de manière générale un bâti qui supporte au moins un ensemble d'organes actifs. Cet ensemble d'organes actifs comprend au moins un dispositif de ramassage avec un châssis (éventuellement réglable en hauteur et le cas échéant en inclinaison).

Un tel dispositif de ramassage comprend un rotor guidé en rotation par rapport au châssis et pouvant être entraîné en rotation. Sur ce rotor sont montés des doigts de râtelage qui ramassent les végétaux au niveau du sol et les déplacent vers le haut et vers l'arrière. Ces doigts sont avantageusement fixés sur le rotor de manière démontable et, en vue de dessus, ces doigts sont dirigés sensiblement perpendiculairement à l'axe du rotor. Ces doigts sont de plus arrangés par groupes de trois ou plus, les doigts de chaque groupe étant situés dans un plan transversal spécifique, préférentiellement perpendiculaire à l'axe longitudinal du rotor. Leur sens de rotation est de préférence tel qu'au niveau de la partie basse du rotor, les doigts se déplacent vers l'avant. La partie basse du rotor fait référence à sa partie située sous l'axe longitudinal lorsque le dispositif est en position de travail.

En outre, le dispositif de ramassage comprend des déflecteurs de guidage qui sont fixés rigidement au châssis en temps normal et notamment lors du travail à l'état monté.

Dans ce cas, chaque déflecteur s'étend selon un plan transversal, préférentiellement perpendiculaire à l'axe longitudinal du rotor.

Les déflecteurs sont disposés les uns à côté des autres selon une direction parallèle à l'axe du rotor avec un espacement mutuel autorisant le passage des doigts d'un groupe, formant ainsi une enveloppe cylindrique partielle ajourée autour du rotor.

Préférentiellement, chaque déflecteur entoure partiellement le rotor et guide les végétaux sur une paroi extérieure lors de leur déplacement depuis le sol jusqu'à ce qu'ils ne soient plus en prise avec les doigts. Lors de leur déplacement, les végétaux glissent donc sur les parois extérieures des déflecteurs, maintenant ainsi la majorité des végétaux à distance du rotor. La paroi extérieure de chaque déflecteur est lisse de manière à éviter toute accroche de fourrage, ce qui pourrait amener à l'intrusion de végétaux entre les déflecteurs. La présence de végétaux au niveau du rotor lors de sa rotation peut entraîner l'enroulement de végétaux autour dudit rotor, provoquant des frottements et pouvant conduire à un ralentissement de la rotation, voire au blocage ou à la casse du rotor.

Par les documents US 3 226 921, US 1 877 519 et EP 1 976 370 par exemple, on connaît déjà des réalisations de dispositifs de ramassage dans lesquels les déflecteurs se présentent sous forme de bandes cintrées en forme de C, lesquelles sont reliées au niveau des deux extrémités libres de leur corps en C au châssis, et ce de manière démontable.

Dans ces réalisations, chaque déflecteur entoure le rotor sur au moins une partie, par exemple sur au moins la moitié de sa circonférence en vue latérale, et de préférence sur plus des trois quarts de celle-ci. Le châssis (fournissant éventuellement des bandes en C complémentaires) et chaque déflecteur forment ensemble une boucle circulaire encerclant le rotor. Les déflecteurs maintiennent une distance entre les végétaux et le rotor et permettent ainsi d'éviter le contact des végétaux avec le rotor : le rotor est ainsi pourvu d'une enveloppe cylindrique circonférentielle ajourée de fentes par rapport à laquelle les doigts sont mobiles.

La fixation rigide, de préférence désolidarisable, du déflecteur avec le châssis peut être obtenue par exemple par coopération vis-écrou, par vissage, par engagement mécanique ou analogue, un de ces moyens de fixation pouvant éventuellement servir à bloquer ou à verrouiller un autre moyen de fixation.

Il est parfois nécessaire d'intervenir sur le rotor, afin par exemple de démonter et/ou de remplacer un palier, un roulement et/ou un doigt. Intervenir sur le rotor implique d'accéder au rotor, voire à l'intérieur du rotor, respectivement aux fixations des doigts sur le rotor. Or, pour accéder au rotor, il est nécessaire de démonter au moins un et généralement plusieurs déflecteur(s).

A cet effet, l'état de l'art actuel propose des moyens de fixation de type détachable ou désolidarisable, généralement situés aux extrémités de chaque déflecteur (voir les documents US et EP précités).

Le démontage de déflecteurs, suivi de leur remontage, induit ainsi une intervention de longue durée et nécessite la dépose et la gestion des parties enlevées. En outre, dans le cas où l'un des moyens de fixation se situe à l'extrémité basse du déflecteur, cette intervention peut également s'avérer ardue et complexe.

Le but de la présente invention est de proposer un dispositif de ramassage du type précité permettant d'accéder facilement et rapidement à au moins un emplacement sur le rotor, avantageusement aux fixations d'au moins certains doigts de râtelage, voire à l'intérieur du rotor, préférentiellement sans nécessiter un démontage d'un ou de plusieurs déflecteur(s).

A cet effet, l'invention a pour objet un dispositif de ramassage selon la revendication 1.

De plus, l'invention a également pour objets une machine agricole comprenant un tel dispositif de ramassage et un procédé de dégagement au moins partiel d'un rotor d'une machine agricole du type précité, comme évoqués ci-après.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig. 1] est une vue en perspective d'un exemple de machine agricole selon l'invention ;

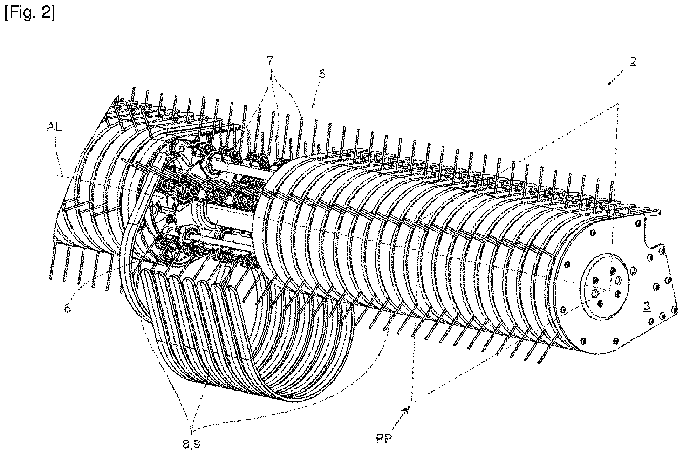

[Fig. 2] est une vue partielle en perspective d'un dispositif de ramassage selon l'invention pouvant faire partie de la machine représentée sur la figure 1, où certains déflecteurs sont à l'état monté et certains à l'état dégagé (l'un étant en cours de dégagement) ;
[Fig. 3] est une vue partielle en coupe selon un plan perpendiculaire à l'axe longitudinal du rotor d'un dispositif de ramassage tel que représenté sur les figures 1 et 2, en relation avec un premier mode de réalisation de l'invention (déflecteur à l'état monté) ;
[Fig. 4] est une vue de détail selon un plan perpendiculaire à l'axe longitudinal du rotor et à une échelle différente, de la liaison articulée reliant un déflecteur avec le châssis (et formant moyen de fixation additionnel), en accord avec le mode de réalisation du dispositif de ramassage représenté figure 3 (déflecteur à l'état monté) ;
[Fig. 5] est une vue en perspective de la liaison articulée reliant un déflecteur avec le châssis (et formant moyen de fixation additionnel), en accord avec un deuxième mode de réalisation du dispositif de ramassage (déflecteur à l'état dégagé) ;
[Fig. 6] est une vue en perspective selon une autre direction de la liaison articulée représentée figure 5 dans une configuration du déflecteur correspondant à son état monté ;
[Fig. 7] est une vue similaire à celle de la figure 3 illustrant une position du ou de déflecteur(s) après détachement(s) du ou de certains moyen(s) de fixation (notamment du premier moyen de fixation), à l'état dégagé du ou des déflecteur(s), et
[Fig. 8] est une vue partielle en coupe selon un plan perpendiculaire à l'axe longitudinal de rotation du rotor d'un dispositif de ramassage, en relation avec une variante de réalisation de l'invention (déflecteurs à l'état monté).

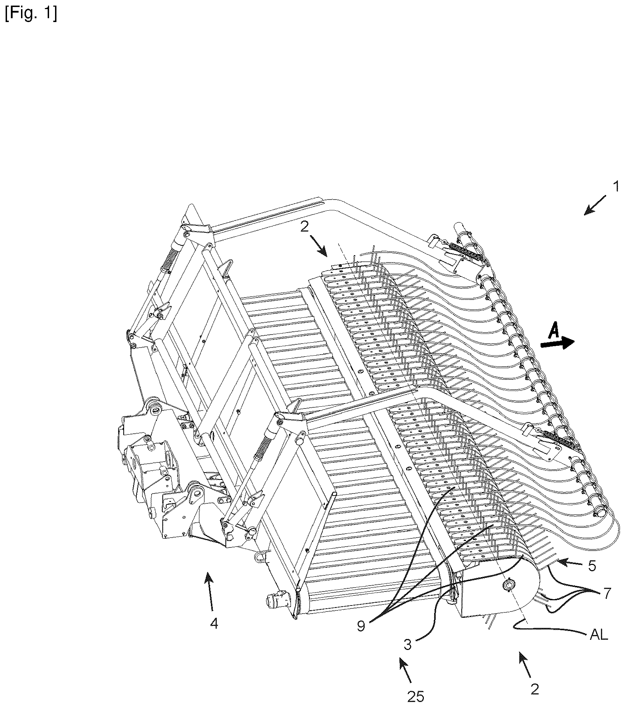

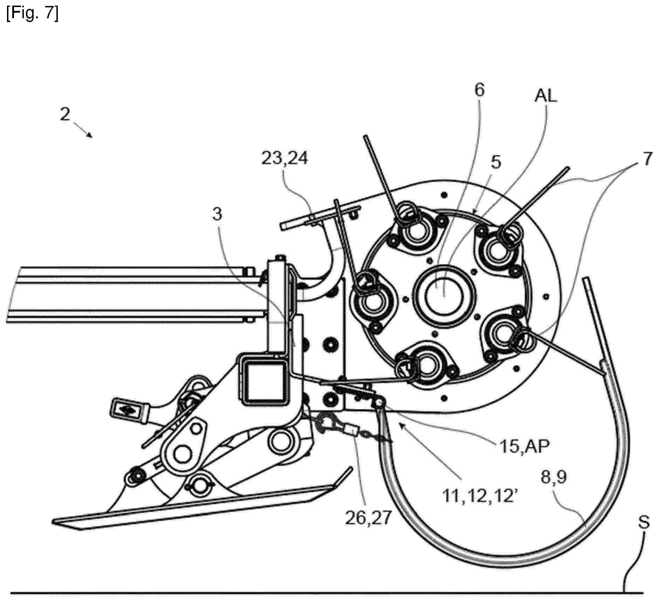

La figure 1, et partiellement la figure 7, illustrent une machine agricole 1 de traitement de végétaux coupés, notamment machine de récolte, comprenant au moins un dispositif 2 de ramassage, de préférence de végétaux tels que de l'herbe ou de la paille.

Ce dispositif 2 comprend un châssis 3 préférentiellement relié au bâti 4 de la machine 1. Ce dispositif 2 comprend, d'une part, en plus du châssis 3, un rotor 5 allongé pouvant être entraîné en rotation par rapport au châssis 3 autour d'un axe longitudinal AL. Le rotor 5 peut comprendre un arbre 6 central guidé en rotation autour de l'axe longitudinal AL, de préférence par des paliers et/ou roulements à billes. L'axe longitudinal AL est sensiblement horizontal, et de préférence transversal, respectivement sensiblement perpendiculaire, à l'avance A du dispositif 2 et/ou de la machine 1 lors du travail. Une pluralité de doigts 7 de râtelage arrangés par groupes de trois ou plus sont montés sur le rotor 5. Les doigts 7 sont arrangés autour de l'arbre 6 du rotor 5 en étant montés sur des supports faisant partie du rotor 5. Les doigts 7 sont montés tournants autour de l'axe longitudinal AL. Le sens de rotation du rotor 5, respectivement des doigts 7, est de préférence tel qu'au niveau de la partie basse du rotor 5, les doigts 7 se déplacent vers l'avant. Chaque groupe de doigts 7 est situé dans un plan PP propre perpendiculaire à cet axe longitudinal AL, ces différents plans PP étant disposés le long dudit axe longitudinal AL, de préférence à intervalles réguliers.

D'autre part, le dispositif 2 comprend une pluralité de déflecteurs 9, de préférence sous la forme de corps 9' incurvés, s'étendant au moins partiellement autour du rotor 5 et espacés selon la direction de l'axe longitudinal AL. Les déflecteurs 9 s'étendent ainsi selon des plans PP perpendiculaires à l'axe longitudinal AL, préférentiellement arrangés parallèlement entre eux. L'espacement entre deux déflecteurs 9 voisins est adapté pour le passage des doigts 7 d'un groupe lors de la rotation du rotor 5, et lesdits déflecteurs 9 sont, à l'état monté, reliés au châssis 3, de préférence rigidement, par l'intermédiaire d'au moins un premier moyen de fixation 10.

Conformément à l'invention, au moins une partie mobile 8 d'au moins un des déflecteurs 9 est reliée avec le châssis 3, respectivement avec une partie fixe 8', par une liaison articulée 11 qui autorise à ladite partie mobile 8 au moins un mouvement de pivotement entraînant un dégagement par rapport au rotor 5. La partie mobile 8 est donc configurée pour pivoter par rapport au châssis 3. Plus précisément, ladite liaison articulée est arrangée et configurée de telle manière qu'après détachement du premier moyen de fixation, au moins la partie mobile du déflecteur concerné peut être pivotée autour d'un axe de pivotement de sorte que le ou chaque déflecteur concerné se retrouve dans un état dégagé.

Grâce à l'invention, en écartant suffisamment au moins une partie mobile 8 du ou de chaque déflecteur 9 du rotor 5, il est possible d'intervenir sur ce rotor 5 sans démonter le ou les déflecteur(s) 9 concerné(s). Le ou chaque déflecteur 9 reste solidaire du dispositif 2, préférentiellement ainsi que la partie mobile 8, ce qui permet de rattacher ledit au moins premier moyen de fixation 10 plus facilement et plus rapidement. Il est alors plus aisé et plus rapide de replacer ledit déflecteur 9 à l'état monté sur le dispositif 2. Une telle conception diminue ainsi nettement le temps d'intervention sur le rotor 5.

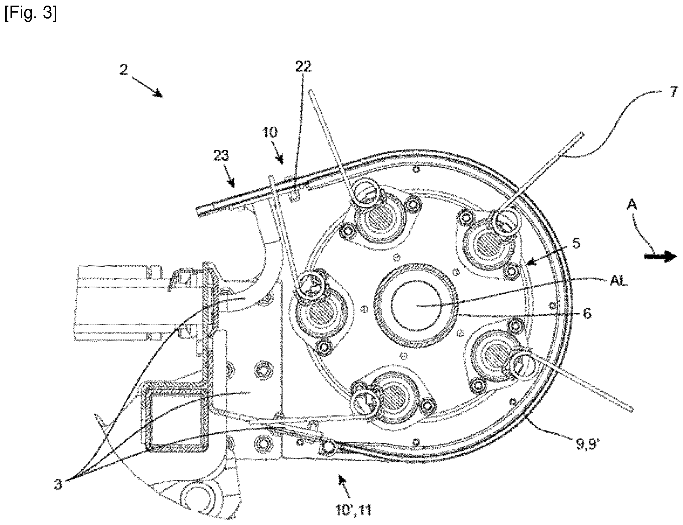

Tel que cela ressort des figures 3 à 8, et au moins à l'état monté, le ou chaque déflecteur 9 est en outre relié avec le châssis 3 par un moyen de fixation additionnel 10' ou second moyen de fixation du déflecteur 9 concerné. Ce moyen de fixation additionnel permet de consolider et de rigidifier l'arrimage du déflecteur 9 avec le châssis 3.

Dans un mode de réalisation préféré, la liaison articulée 11 forme le moyen de fixation additionnel 10' du ou de chaque déflecteur 9 avec le châssis 3, au moins à son état monté et de préférence également à l'état dégagé. Ainsi la liaison articulée 11 permet le dégagement au moins de la partie mobile 8 du déflecteur 9 par rapport au rotor 5, tout en autorisant la consolidation de l'arrimage du déflecteur 9 avec le châssis 3. Une telle conception permet, en outre, de simplifier la fabrication de la liaison articulée 11 et/ou du déflecteur 9.

Dans un mode de réalisation préféré, le ou chaque déflecteur 9 consiste en un corps 9' incurvé, préférentiellement d'un seul tenant. Le corps 9' est avantageusement en forme de C ou de U, préférentiellement ouvert vers l'arrière. La paroi extérieure du corps 9' fournit ainsi une surface convexe en forme de bande. De préférence, la liaison articulée 11 est située à proximité d'une des deux extrémités du corps 9', de sorte que l'écartement et donc le dégagement par rapport au rotor 5 est important. En sus, la partie mobile 8 constitue avantageusement la totalité du déflecteur 9 considéré, permettant que le dégagement, après pivotement, soit encore plus important et simplifiant la fabrication et le montage du déflecteur 9.

Dans la présente description, à moins d'une indication contraire, les notions « avant », « arrière », « devant » et « derrière » sont définies en regardant dans le sens d'avance A. De plus, dans la présente description, à moins d'une indication contraire, les indications concernant le ou chaque déflecteur 9 sont données lorsque ledit déflecteur 9 est à l'état monté.

Le premier moyen de fixation 10 est situé à proximité de l'autre des deux extrémités du corps 9' du ou de chaque déflecteur 9 par rapport au moyen de fixation additionnel 10'. Selon une autre caractéristique intéressante, le premier moyen de fixation 10 est situé à proximité de l'autre des deux extrémités du corps 9' du ou de chaque déflecteur 9 par rapport à la liaison articulée 11. Il est ainsi possible de dégager un accès conséquent au rotor 5 au niveau du ou des déflecteur(s) 9 concerné(s), notamment à l'état dégagé maximal, sans avoir à démonter ce(s) dernier(s), en particulier sans avoir à libérer ou détacher le moyen de fixation additionnel 10' (confondu préférentiellement avec la liaison articulée 11).

En vue latérale, un déflecteur 9 considéré comporte au moins une partie courbe formant de préférence un arc de cercle centré sur l'axe AL. Chaque déflecteur 9 forme globalement un C, dont l'ouverture est de préférence orientée vers l'arrière (par rapport à l'avance A de la machine 1 considérée). La paroi extérieure d'un déflecteur 9 forme une surface convexe destinée à guider les végétaux coupés lorsque ceux-ci sont en prise avec les doigts 7. Avantageusement, le déflecteur 9 comporte une branche inférieure s'étendant horizontalement et située au moins partiellement en dessous du rotor 5. La branche inférieure forme une courbe dont le centre de courbure est de préférence plus haut que ladite partie inférieure. Le déflecteur 9 comporte aussi une partie frontale s'étendant verticalement, située au moins partiellement à l'avant du rotor 5 et formant une courbe dont le centre de courbure est de préférence derrière la partie frontale. Le déflecteur 9 comporte également une branche supérieure s'étendant préférentiellement sensiblement horizontalement, située au moins partiellement au-dessus du rotor 5 et formant une courbe dont le centre de courbure est de préférence en dessous de ladite partie supérieure.

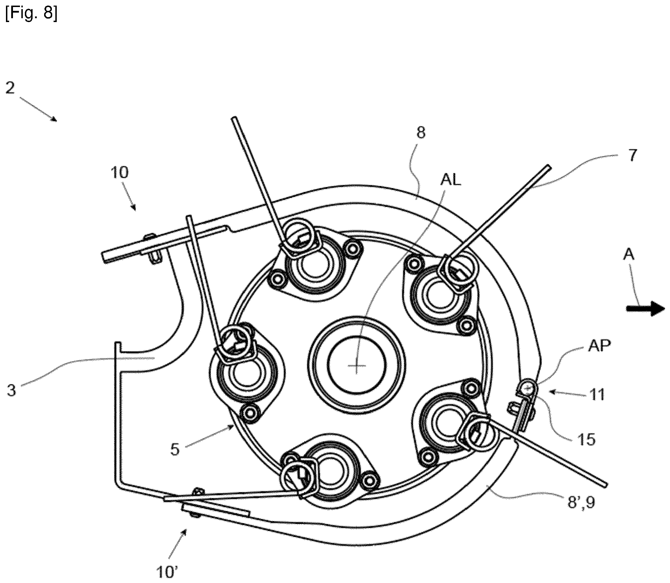

Ainsi que représenté sur la figure 3, la liaison articulée 11 est préférentiellement située à l'extrémité inférieure du corps 9', à l'état monté du déflecteur 9 considéré. Alternativement, et ainsi que représenté sur la figure 8, la liaison articulée 11 peut être située à l'extrémité avant du corps 9', à l'état monté du déflecteur 9 considéré. La première fixation 10 est située, à l'état monté du déflecteur 9 considéré, à l'extrémité supérieure du déflecteur 9, respectivement du corps 9'. Un avantage de cette construction est d'éviter toute intervention dans la zone inférieure dudit déflecteur 9, respectivement du dispositif 2, généralement plus difficile d'accès. A l'état dégagé, il est ainsi possible d'intervenir sur le dispositif 2 par le haut, ce qui est plus aisé et plus ergonomique. D'autre part, la pesanteur est avantageusement mise à contribution pour ouvrir et/ou maintenir à l'état dégagé le déflecteur 9 concerné. Une attache 26 peut aussi être prévue afin de maintenir la partie mobile 8 dans au moins un état dégagé, et de préférence dans plusieurs états dégagés. Notamment, l'attache 26 peut permettre que le déflecteur 9 reste à l'état dégagé maximal. Ainsi dans au moins un état dégagé, et préférentiellement au moins à l'état dégagé maximal, la partie mobile 8 est dans une position d'équilibre stable. Cet équilibre peut être assuré grâce à la pesanteur et/ou à l'attache 26. Il n'est ainsi avantageusement pas nécessaire de maintenir manuellement le déflecteur 9, respectivement la partie mobile 8 concernée. Ce maintien en position confère également une sécurité supplémentaire. L'attache 26 peut être réalisée par une ou plusieurs chainette(s) 27. On note que, même dans le cas où la liaison articulée 11 est située à l'extrémité supérieure du corps (9'), à l'état monté du déflecteur (9) considéré, une attache 26 permettant de maintenir en équilibre la partie mobile 8 correspondante, il n'est pas nécessaire de maintenir cette dernière, ni de la démonter, ce qui facilite et raccourcit une intervention sur le rotor 5, et ce d'autant plus que le nombre de déflecteurs (9) est important.

Conformément à une première variante constructive, permettant au déflecteur 9 de disposer de degrés de liberté supplémentaires après détachement du premier moyen de fixation 10, mais ne faisant pas partie de l'invention, la liaison articulée 11 peut être une liaison rotule.

Toutefois, et conformément à une seconde variante constructive préférée et en accord avec l'invention, plus simple et plus économique, la liaison articulée 11 est une liaison pivot avec un axe de pivotement AP orienté de préférence sensiblement parallèlement à l'axe longitudinal AL du rotor 5 (cf. figure 3). Une telle réalisation permet une immobilisation de la partie mobile 8 selon tous les degrés de liberté, sauf pour la rotation autour de l'axe AP. Dans ce cas, l'axe de pivotement AP de la liaison articulée 11 peut être formé par une tige 15 logée dans un palier P.

Préférentiellement, le premier moyen de fixation 10 est, à lui seul, apte à entraver tous les degrés de liberté du déflecteur 9 concerné par rapport au châssis 3. De plus, au moins un des moyens de fixation 10 et moyen de fixation additionnel 10' est situé de manière à être accessible de l'extérieur, préférentiellement au niveau de la paroi extérieure du déflecteur 9. En outre, au moins un parmi le premier moyen de fixation 10 et le moyen de fixation additionnel 10' est de type détachable, préférentiellement les deux moyens 10 et 10'.

Dans le mode de réalisation préféré, le premier moyen de fixation 10 comprend un boulonnage 22. Préférentiellement, le boulonnage 22 est réalisé par une vis en prise avec un filetage solidaire du châssis 3 à l'état monté du déflecteur 9 considéré. Selon ce mode de réalisation, le détachement du boulonnage 22, respectivement du premier moyen de fixation 10, est réalisé en dévissant la vis du filetage, de sorte qu'ils ne soient plus être en prise. L'attachement et/ou le détachement d'un boulonnage 22 est facile et rapide. En outre, un boulonnage 22 assurant la fixation par serrage, le trou traversant le déflecteur 9 pour faire passer la vis ne doit pas être usiné avec une précision particulière. Un autre avantage du boulonnage 22 comme moyen de fixation 10 et/ou 10' est qu'il est possible de le noyer, c'est-à-dire qu'il ne fasse pas saillie du déflecteur 9. Il est également avantageusement possible de choisir une vis et/ou un écrou plat(e)(s). La paroi extérieure de chaque déflecteur 9 reste alors lisse de manière à éviter toute accroche de fourrage. Alternativement, ce moyen de fixation 10 pourrait être réalisé par un rivet, ou encore par une goupille possiblement en matière élastomère ou caoutchouc insérée par élasticité dans un orifice du déflecteur 9 et du châssis 3.

Comme le montrent les figues 3 à 8 à titre d'exemples, lorsque les deux moyens de fixation 10 et 10' sont attachés, ils solidarisent le ou chaque déflecteur 9 concerné avec le châssis 3, ledit déflecteur 9 est alors à l'état monté, c'est-à-dire dans sa configuration pour le travail. Après détachement du premier moyen de fixation 10, le ou chaque déflecteur 9 concerné est à l'état dégagé. A l'état dégagé du déflecteur 9, la partie mobile 8 reste reliée au châssis 3, de préférence par le moyen de fixation additionnel 10'. La ou les parties mobiles 8 concernée(s) reste(nt) ainsi solidaire(s) du châssis 3, même à l'état dégagé maximal. Conséquemment, il n'est pas nécessaire de s'occuper du sort du ou des déflecteur(s) 9 à l'état dégagé (pas de rangement, ni d'entreposage de parties 8 ou de corps 9' de déflecteur). Il est en outre impossible de perdre un déflecteur 9, respectivement une partie mobile 8, à l'état dégagé. Cela diminue avantageusement le nombre d'actions à mener pour accéder au rotor 5, et implique ainsi une intervention plus rapide. Après détachement du premier moyen de fixation 10, au moins la partie mobile 8, et de préférence la totalité du déflecteur 9 concerné peut être pivotée autour de l'axe de pivotement AP. Ce pivotement est réalisé manuellement, en exerçant sur la partie mobile 8 un couple autour de l'axe AL, de préférence orienté dans le sens inverse à la rotation du rotor 5, respectivement des doigts 7. Après ledit pivotement, le déflecteur 9 occupe un état plus ou moins écarté et donc plus ou moins dégagé. A l'état dégagé, seul un parmi le premier moyen de fixation 10 et le moyen de fixation additionnel 10' est attaché, et de préférence seule la liaison articulée 11 formant le moyen de fixation additionnel 10'. A l'état dégagé, le ou chaque déflecteur 9 ne recouvre que partiellement ou pas du tout le rotor 5. A l'état dégagé (cf. figure 7), le déflecteur 9 recouvre en tout cas moins le rotor 5 qu'à l'état monté. Dans la configuration correspondant à l'état dégagé maximal, au moins un quart de la surface extérieure du rotor 5, respectivement de la circonférence du rotor 5, est préférentiellement dégagé. Après un certain angle de pivotement, de préférence correspondant à son état dégagé maximal, le déflecteur 9 concerné peut être translaté selon la direction de l'axe de pivotement AP de manière à être démonté du dispositif 2.

En accord avec des constructions préférées du dispositif 2, il peut être prévu qu'à l'état monté, ledit au moins un déflecteur 9 entoure le rotor 5 sur au moins la moitié, avantageusement sur au moins 2/3, préférentiellement sur au moins 3/4, de sa circonférence vue selon l'axe longitudinal AL. A l'état dégagé maximal dudit déflecteur 9, au moins 20 % de la circonférence du rotor 5, préférentiellement au moins entre 25 % et 30 % de ladite circonférence, sont dégagés.

Selon une autre caractéristique de l'invention, ressortant notamment des figures 3 et 7, la ou chaque liaison articulée 1lest configurée et/ou arrangée pour autoriser une rotation d'au moins 45°, avantageusement d'au moins 50°, préférentiellement d'au moins 60°, et plus préférentiellement encore d'au moins 75°, de la partie mobile 8 autour de l'axe de pivotement AP (entre la position à l'état monté et la position à l'état dégagé maximal du déflecteur 9 concerné, préférentiellement vers le bas). Chaque ampleur de pivotement permet d'obtenir un dégagement d'autant plus important de manière à faciliter davantage encore l'intervention. Le châssis 3 et le au moins un déflecteur 9 sont également configurés et/ou arrangés pour autoriser ces rotations.

Conformément au mode de réalisation préféré, à l'état monté, un moyen de centrage 23, de préférence détachable, permet de positionner le ou chaque déflecteur 9 sur le châssis 3. Ce moyen de centrage 23 permet d'assurer une bonne orientation du ou de chaque déflecteur 9 parallèlement à un plan PP propre perpendiculaire. Dans le mode de réalisation préféré, le moyen de centrage 23 est situé à proximité du premier moyen de fixation 10.

Le moyen de centrage 23 peut comprendre un téton 24, préférentiellement solidaire du châssis 3. A l'état monté du déflecteur 9, le téton 24 est inséré dans un orifice réalisé de préférence à une extrémité dudit déflecteur 9. Le détachement du moyen de centrage 23 est réalisée en écartant les extrémités du déflecteur 9 l'une de l'autre après le détachement du moyen de fixation 10.

Dans le mode de réalisation alternatif représenté sur la figure 8, la liaison articulée 11 est située entre le premier moyen de fixation 10 et le moyen de fixation additionnel 10' (en longeant le corps 9' du déflecteur 9). Dans ce mode, la partie fixe 8' reste rigidement fixée au châssis 3, de préférence par le moyen de fixation additionnel 10', lors du mouvement de pivotement de la partie mobile 8 autour de la liaison articulée 11, de préférence après détachement d'un seul (quelconque) des moyens de fixation 10, 10', et préférentiellement du premier moyen de fixation 10. Seule la partie mobile 8 est écartée/dégagée du rotor 5.

En vue d'aboutir à une construction légère et peu coûteuse, ledit au moins un déflecteur 9 peut être réalisé en un matériau thermoplastique (exemples de matériaux possibles : PA6 ou PEHD), sous la forme d'une pièce thermoformée ou moulée par injection. Un tel matériau se laisse par ailleurs facilement déformé, du moins élastiquement, et même manuellement. De plus, au moins une nervure 9" de renforcement structurel est formée sur le côté interne (situé à l'opposé de la paroi extérieure) du corps 9'. Préférentiellement tous les déflecteurs 9 sont réalisés de cette manière.

Afin d'aboutir à une réduction du nombre de pièces nécessaires et à une fabrication simple et économique de la liaison articulée 11, cette dernière peut être composée de deux composantes complémentaires 12 et 12' mutuellement coopérantes. Une première composante 12 est intégrée à la partie mobile 8 considérée, respectivement au déflecteur 9 considéré. Une deuxième composante 12' est solidaire de la partie fixe 8', respectivement du châssis 3.

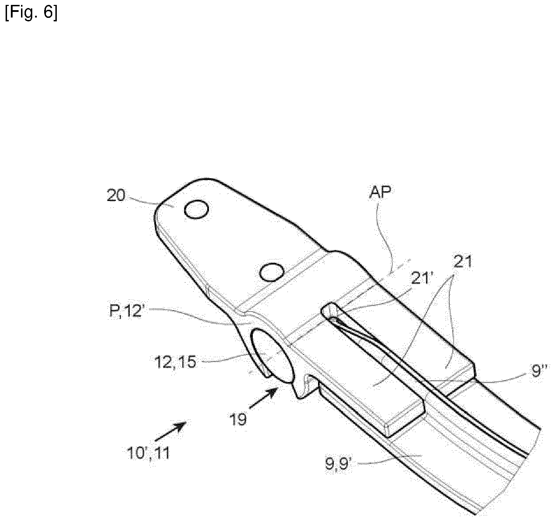

Dans l'exemple de réalisation représenté sur la figure 6 notamment, la première composante 12 est constituée par une tige 15. La tige 15 forme l'axe de pivotement AP de la liaison articulée 11, préférentiellement réalisée par un pivot. Dans les exemples représentés, la tige 15 est formée d'un seul tenant avec le corps 9' du déflecteur 9 considéré, et constitue de préférence l'extrémité inférieure dudit corps 9' à l'état monté du déflecteur 9 considéré. Ainsi que représenté sur les figure 7 et 8, la tige 15 fait partie de la partie mobile 8.

Comme cela ressort des figures 3 à 6, la tige 15 peut être avantageusement reliée au corps 9' par un étranglement 13, préférentiellement de largeur restreinte.

La deuxième composante 12' est un palier P. Le palier P loge avec guidage la tige 15. Ce guidage de la liaison pivot permet d'éviter un coincement, par exemple dû à un guidage manuel approximatif du pivotement du déflecteur 9, respectivement de la partie mobile 8. Le guidage de la tige 15 par le palier P permet également que l'effort à fournir pour le pivotement soit réduit. Le palier P peut comprendre deux parties de palier 14 et 14' coopérant chacune avec l'une des deux portions de tige 15 s'étendant de manière saillante au-delà de l'étranglement 13. Ces deux parties de paliers 14 et 14' autorisent un déplacement de l'étranglement 13 entre elles, au moins sur un angle de débattement limité du déflecteur 9.

Ainsi, à l'état monté du déflecteur 9 (configuration optimale ou adaptée au travail), les deux parties de palier 14 et 14' situées côte à côte avec espacement reçoivent entre elles l'étranglement 13. Les parties de palier 14 et 14' bloquent ainsi le déflecteur 9 selon tous les degrés de liberté au niveau du moyen de fixation 10' additionnel hormis la rotation autour de l'axe de pivotement AP.

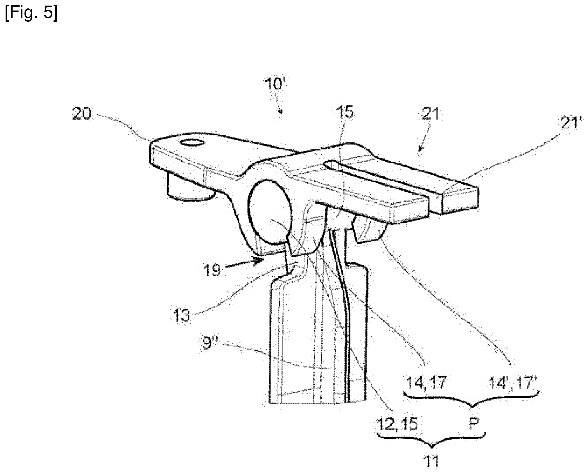

Selon une autre caractéristique avantageuse de l'invention, illustrée notamment par les figures 5 et 6, l'une au moins des deux parties de palier 14, 14' présente une ouverture 19 configurée pour autoriser le passage du déflecteur 9 considéré, respectivement de l'étranglement 13, par coulissement selon la direction de l'axe de pivotement AP lorsque le déflecteur 9 est à l'état dégagé maximal.

Cette ouverture 19 sous forme de fente axiale est configurée et située de manière à ce que, lorsque le déflecteur est à l'état dégagé maximal, l'étranglement 13 ne se trouve pas entre les parties de palier 14, 14'. La tige 15 peut alors coulisser dans le palier P selon l'axe de pivotement AP afin d'assembler ou démonter le déflecteur sur le dispositif 2. Cet agencement permet de monter et démonter le déflecteur 9, préférentiellement au niveau de son extrémité basse, simplement, rapidement et sans avoir recours à un outil. Les actions d'assemblage et de démontage d'un déflecteur 9 sont ainsi avantageusement écourtées.

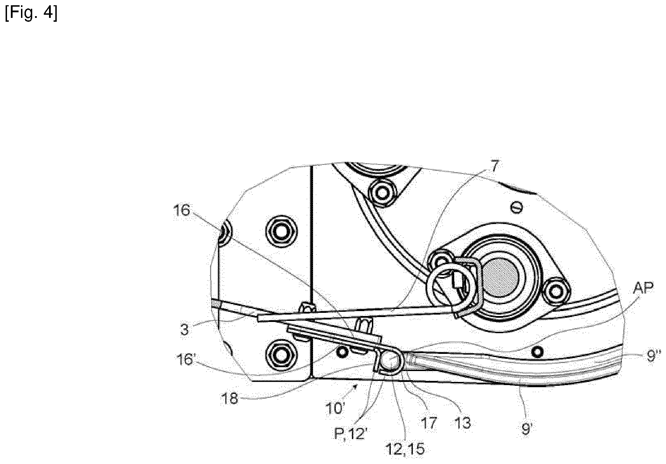

En accord avec une première variante constructive, illustrée sur la figure 4 notamment, la deuxième composante 12', respectivement le palier P, est composée de deux brides 16, 16' mutuellement coopérantes et assemblées entre elles et avec le châssis 3. La première bride 16 comporte deux crochets cintrés espacés 17, 17'. La seconde bride 16' comporte au moins une ailette 18 configurée pour fermer les ouvertures des deux crochets 17, 17' de manière à constituer avec ces derniers les deux parties de palier 14, 14'.

En accord avec une seconde variante constructive, ressortant des figures 5 et 6, la deuxième composante 12', respectivement le palier P, consiste en une pièce, préférentiellement en métal, comprenant deux bagues annulaires 17, 17'. Le palier P est formé d'un seul tenant avec une platine de fixation 20 préférentiellement détachable et rattachable au châssis 3 par moyen(s) de fixation.

L'invention peut ainsi prévoir que le palier P comprenne également, au niveau des deux crochets 17, 17' de la première bride 16 ou des deux bagues 17, 17' de la pièce moulée, une extension sous la forme d'une aile 21 avec une découpe en forme de fente 21', ou de deux ailes espacées par un interstice en forme de fente 21'. La fente 21' reçoit préférentiellement de manière ajustée une partie extrémale de la nervure de renforcement 9" lorsque le déflecteur 9 considéré est à l'état monté. L'aile 21 ou les deux ailes espacées forme(nt) en outre butée pour ledit déflecteur 9.

Grâce à ces dispositions, on aboutit à un blocage additionnel du déflecteur 9 dans la direction de l'axe AL et à son blocage en rotation additionnel au niveau de la liaison articulée 11, de préférence autour de l'axe de pivotement AP (en plus du blocage résultant de la solidarisation du premier moyen de fixation 10).

Le cas échéant, en cas de présence d'une région d'intervention privilégiée au niveau du rotor 5, un unique déflecteur 9 assemblé au châssis 3 par une liaison articulée 11 peut suffire, les autres déflecteurs étant alors solidarisés de manière traditionnelle audit châssis (par exemple même type de fixations désolidarisables en haut et en bas, ou non).

Selon une mode de réalisation alternatif, les ou certains déflecteurs 9 sont rigidement reliés les uns aux autres. Ils constituent ensemble un composant formant une enveloppe cylindrique partielle ajourée autour du rotor 5. La partie mobile 8 reliée avec le châssis 3 par la liaison articulée 11, peut être commune aux déflecteurs 9 formant ledit composant. Dans une variante spécifique de ce mode de réalisation, la partie mobile 8 comporte tous les déflecteurs 9. Le mouvement de pivotement de la partie mobile 8 entraine donc un dégagement simultané de tous les déflecteurs 9 par rapport au rotor 5, préférentiellement sur toute la largeur dudit rotor 5.

Toutefois, avantageusement plusieurs déflecteurs 9 situés côte à côte pour dégager une partie longitudinale au moins du rotor 5 ou disposés en alternance avec des déflecteurs fixés de manière traditionnelle, sont prévus au niveau du dispositif 2.

Enfin, préférentiellement tous les déflecteurs 9 sont solidarisés au châssis 3 en accord avec les dispositions de l'invention. De plus, tous les déflecteurs 9 sont préférentiellement identiques, permettant une production standardisée, en grandes séries et donc une diminution du prix de revient. Ainsi, dans le mode de réalisation préféré, chaque déflecteur 9 est relié avec le châssis 3 par une liaison articulée 11 propre. De plus, dans le mode de réalisation préféré, chaque déflecteur peut être dégagé indépendamment des autres déflecteurs 9. Ainsi, le dégagement par rapport au rotor 5 entrainé par le pivotement d'un déflecteur 9, est partiel. Dans le mode de réalisation préféré, le dégagement par rapport au rotor 5 sur toute la largeur du rotor 5 est entrainé par le pivotement de tous les déflecteurs 9.

L'invention a également pour objet une machine 1 agricole de traitement des végétaux coupés, notamment une machine de récolte, comprenant au moins un dispositif 2 de ramassage, ledit dispositif 2 étant du type décrit précédemment. La machine 1 peut être du type portée ou trainée, avec un moyen d'attelage à un tracteur, ou encore automotrice. Le dispositif 2, respectivement la machine 1, peut être supporté au sol S par des roues ou des patins, situés de préférence derrière le rotor 5 vu dans le sens d'avance A.

Le dispositif 2 peut occuper une position de travail dans laquelle les doigts 7 sont proches du sol S et aptes à ratisser les végétaux y gisant. Dans cette position, l'axe longitudinal AL est allongé et/ou sensiblement parallèle au sol S. Le dispositif 2 peut également occuper une position surélevée (figure 7) de sorte à pouvoir faire pivoter au moins la partie mobile 8 du ou de chaque déflecteur 9 en position dégagé selon un angle important.

Sur la machine 1 représentée sur la figure 1, derrière le dispositif 2 de ramassage vu selon le sens d'avance A, est monté un convoyeur 25 destiné à déplacer les végétaux transversalement à l'avance A, de manière à les déposer en andains. Le convoyeur 25 reçoit les végétaux projetés vers l'arrière par le dispositif 2. Au travail, le dispositif 2 est en position de travail et le rotor 5 est entrainé en rotation autour de l'axe longitudinal AL.

Les figures 3, 7 et 8, montrent un déflecteur 9 pour un dispositif de ramassage 2 tel que décrit précédemment, ce déflecteur 9 comprenant une partie mobile 8 avec une tige d'un seul tenant et configurée pour être reliée avec le châssis 3 du dispositif de ramassage 2 par une liaison articulée 11 dont l'axe de pivotement AP est formé par la tige 15 précitée et qui autorise à ladite partie mobile 8 au moins un mouvement de pivotement entraînant un dégagement par rapport au rotor 5 dudit dispositif de ramassage 2.

L'objet de l'invention porte par ailleurs sur un procédé permettant de dégager partiellement au moins le rotor 5 d'un dispositif 2 de ramassage.

Dans ce contexte, l'invention propose aussi un procédé selon la revendication 11.

Avantageusement, la au moins une partie mobile 8, respectivement la totalité du corps 9', d'au moins un déflecteur 9, est pivotée vers le bas. Préférentiellement, pour atteindre l'état dégagé maximal d'un déflecteur 9, sa partie mobile 8, ou la totalité de son corps 9', est pivotée selon un angle compris entre 45° et 250°, plus préférentiellement entre 60° et 180°.

Plus précisément et en relation avec les figures annexées, pour dégager au moins partiellement le rotor 5 du dispositif 2 de ramassage, on détache d'abord ledit au moins premier moyen de fixation 10. Le cas échéant, il peut être nécessaire de désengager le moyen de centrage 23 du déflecteur 9 à l'état monté, de préférence suite au détachement du ou des premier(s) moyen(s) de fixation 10. Dans l'exemple de réalisation avec plusieurs premiers moyens de fixation 10 par déflecteur 9 ou partie mobile 8, il y a lieu de les détacher tous. On pivote ensuite la partie mobile 8, respectivement la totalité, du déflecteur 9 autour de la liaison articulée 11, respectivement de l'axe de pivotement AP, de préférence dans le sens de rotation contraire à celui des doigts de râtelage 7 lorsque le rotor 5 est entrainé en rotation. Ce pivotement entraine un dégagement par rapport au rotor 5. Le déflecteur 9 se trouve alors à l'état dégagé. Afin d'obtenir un dégagement important par rapport au rotor 5, il est avantageux de pouvoir pivoter l'au moins un déflecteur 9 selon un angle compris entre 45° et 180°. Dans le mode de réalisation préféré, pour dégager une partie conséquente du rotor 5, on transpose plusieurs voire tous les déflecteurs 9 depuis leur état monté jusqu'à leur état dégagé, de la manière qu'il vient d'être énoncée. Afin de transposer le ou chaque déflecteur 9 depuis l'état dégagé jusqu'à l'état monté, on effectue les étapes précitées dans l'ordre inverse.

Dans le mode de réalisation préféré, afin de démonter le déflecteur 9 du châssis 3, on pivote la totalité du déflecteur 9 autour de l'axe de pivotement AP jusqu'à ce qu'il soit possible de le faire coulisser selon l'axe de pivotement AP. Ensuite, on fait coulisser le déflecteur 9 selon l'axe de pivotement AP, de préférence par une ouverture 19 prévue à cet effet, jusqu'à ce que le déflecteur 9 soit démonté (du châssis 3). Dans le mode de réalisation préféré, afin de monter le déflecteur 9 sur le châssis 3, on effectue les étapes précitées dans l'ordre inverse.

## Revendications

1. Dispositif (2) de ramassage comprenant, d'une part, un châssis (3) et un rotor (5) allongé guidé en rotation par rapport au châssis (3) autour d'un axe longitudinal (AL), une pluralité de doigts de râtelage (7) arrangés par groupes de trois ou plus étant montés sur le rotor (5), chaque groupe de doigts (7) étant situé dans un plan (PP) propre perpendiculaire à l'axe longitudinal (AL), ces différents plans (PP) étant disposés le long dudit axe longitudinal (AL), et, d'autre part, une pluralité de déflecteurs (9) s'étendant au moins partiellement autour du rotor (5) et espacés selon la direction de l'axe longitudinal (AL), l'espacement entre deux déflecteurs (9) voisins étant adapté pour le passage des doigts (7) d'un groupe lors de la rotation du rotor (5), et lesdits déflecteurs (9) étant, dans un état monté, reliés au châssis (3) par l'intermédiaire d'au moins un premier moyen de fixation (10), au moins une partie mobile (8) d'au moins un des déflecteurs (9) étant reliée avec le châssis (3), respectivement avec une partie fixe (8') de déflecteur (9), par une liaison articulée (11) qui autorise à ladite partie mobile (8) au moins un mouvement de pivotement entraînant un dégagement par rapport au rotor (5),
dispositif (2) de ramassage **caractérisé en ce que** ladite liaison articulée (11) est arrangée et configurée de telle manière qu'après détachement du premier moyen de fixation (10), au moins la partie mobile (8) du déflecteur (9) concerné peut être pivotée autour d'un axe de pivotement (AP) de sorte que le ou chaque déflecteur (9) concerné se retrouve dans au moins un état dégagé, dans lequel la partie mobile (8) est dans une position d'équilibre stable.

2. Dispositif selon la revendication 1, **caractérisé en ce que** le ou chaque déflecteur (9) est en outre relié avec le châssis (3) par un moyen de fixation additionnel (10').

3. Dispositif selon la revendication 2, **caractérisé en ce que** la liaison articulée (11) forme le moyen de fixation additionnel (10') du ou de chaque déflecteur (9) avec le châssis (3).

4. Dispositif selon l'une des revendications 1 à 3, **caractérisé en ce que** le ou chaque déflecteur (9) consiste en un corps (9') incurvé, la ou chaque liaison articulée (11) étant située à proximité d'une des deux extrémités dudit corps (9').

5. Dispositif selon la revendication 4, **caractérisé en ce que** le premier moyen de fixation (10) est situé à proximité de l'autre des deux extrémités du corps (9') du ou de chaque déflecteur (9), par rapport à la liaison articulée (11).

6. Dispositif selon l'une des revendications 1 à 5, **caractérisé en ce que** la liaison articulée (11) est située à l'extrémité inférieure du corps (9'), à l'état monté du déflecteur (9) considéré.

7. Dispositif selon l'une quelconque des revendications 1 à 6, **caractérisée en ce que** la liaison articulée (11) est une liaison pivot avec un axe de rotation (AP) orienté sensiblement parallèlement à l'axe longitudinal (AL) du rotor (5).

8. Dispositif selon l'une des revendications 1 à 7, **caractérisé en ce que** l'axe de pivotement (AP) de la liaison articulée (11) du ou de chaque déflecteur (9) considéré est formé par une tige (15) logée dans un palier (P).

9. Dispositif selon l'une des revendications 1 à 8, **caractérisé en ce que** le ou chaque déflecteur (9) considéré comprend une partie mobile (8) avec une tige (15) d'un seul tenant et configurée pour être reliée avec le châssis (3) dudit dispositif (2) par une liaison articulée (11) dont l'axe de pivotement (AP) est formé par la tige (15) précitée et qui autorise à ladite partie mobile (8) au moins un mouvement de pivotement entraînant un dégagement par rapport au rotor (5) dudit dispositif (2).

10. Machine agricole (1) de traitement des végétaux coupés, notamment machine de récolte, **caractérisée en ce qu'**elle comprend au moins un dispositif (2) de ramassage selon l'une quelconque des revendications 1 à 9.

11. Procédé de dégagement au moins partiel d'un rotor (5) allongé d'un dispositif (2) de ramassage d'une machine agricole (1) de traitement des végétaux coupés, ledit dispositif (2) de ramassage comprenant, d'une part, un châssis (3) et un rotor (5) pouvant être entraîné en rotation par rapport au châssis (3) autour d'un axe longitudinal (AL), une pluralité de doigts de râtelage (7) arrangés par groupes de trois ou plus étant montés sur le rotor (5), chaque groupe de doigts (7) étant situé dans un plan (PP) propre perpendiculaire à l'axe longitudinal (AL), ces différents plans (PP) étant disposés le long dudit axe longitudinal (AL), et, d'autre part, une pluralité de déflecteurs (9) s'étendant au moins partiellement autour du rotor (5) et espacés selon la direction de l'axe longitudinal (AL), l'espacement entre deux déflecteurs (9) voisins étant adapté pour le passage des doigts (7) d'un groupe lors de la rotation du rotor (5), et lesdits déflecteurs (9) étant, à l'état monté, reliés au châssis (3) par l'intermédiaire d'au moins un premier moyen de fixation (10), procédé **caractérisé en ce qu'**il consiste, pour dégager au moins partiellement le rotor (5), à détacher ledit au moins premier moyen de fixation (10), puis à pivoter ladite au moins une partie mobile (8), respectivement la totalité, d'au moins un déflecteur (9) autour d'une liaison articulée (11) reliant ce déflecteur avec le châssis (3), entraînant un dégagement par rapport au rotor (5) de sorte que le ou chaque déflecteur (9) concerné se retrouve dans au moins un état dégagé, dans lequel la partie mobile (8) est dans une position d'équilibre stable.

12. Procédé de dégagement selon la revendication 11, **caractérisé en ce que** la au moins une partie mobile (8), respectivement la totalité du corps (9'), d'au moins un déflecteur (9), est pivotée vers le bas en vue de dégager le rotor (5).

13. Procédé de dégagement selon l'une des revendications 11 ou 12, **caractérisé en ce que**, pour atteindre l'état dégagé maximal d'un déflecteur (9), sa partie mobile (8), ou la totalité de son corps (9'), est pivotée selon un angle compris entre 45° et 250°, plus préférentiellement entre 60° et 180°. 1

## Patentansprüche

1. Aufnahmevorrichtung (2) mit einerseits einem Rahmen (3) und einem länglichen Rotor (5), der in Bezug auf den Rahmen (3) um eine Längsachse (AL) drehgeführt ist, wobei eine Vielzahl von Rechfingern (7), in Gruppen von drei oder mehr angeordnet, auf dem Rotor (5) montiert sind, wobei sich jede Gruppe von Fingern (7) in einer eigenen Ebene (PP) senkrecht zur Längsachse (AL) befindet, wobei diese unterschiedlichen Ebenen (PP) entlang der Längsachse (AL) angeordnet sind, und andererseits einer Vielzahl von Ablenkern (9), die sich mindestens teilweise um den Rotor (5) erstrecken und gemäß der Richtung der Längsachse (AL) beabstandet sind, wobei der Abstand zwischen zwei benachbarten Ablenkern (9) für den Durchgang der Finger (7) einer Gruppe bei der Drehung des Rotors (5) angepasst ist und die Ablenker (9), in einem montierten Zustand, mit dem Rahmen (3) mittels mindestens eines ersten Befestigungsmittels (10) verbunden sind, wobei mindestens ein bewegliches Teil (8) mindestens eines der Ablenker (9) mit dem Rahmen (3) beziehungsweise mit einem festen Teil (8') des Ablenkers (9) durch eine Gelenkverbindung (11) verbunden ist, die dem beweglichen Teil (8) mindestens eine Drehbewegung erlaubt, die eine Freisetzung in Bezug auf den Rotor (5) nach sich zieht, wobei die Aufnahmevorrichtung (2) **dadurch gekennzeichnet ist, dass** die Gelenkverbindung (11) so angeordnet und ausgestaltet ist, dass nach Loslösen des ersten Befestigungsmittels (10) mindestens das bewegliche Teil (8) des betroffenen Ablenkers (9) um eine Drehachse (AP) gedreht werden kann, sodass sich der oder jeder betroffene Ablenker 9 in mindestens einem freigesetzten Zustand befindet, in dem sich das bewegliche Teil (8) in einer Position stabilen Gleichgewichts befindet.

2. Vorrichtung nach Anspruch 1, **dadurch gekennzeichnet, dass** der oder jeder Ablenker (9) des Weiteren mit dem Rahmen (3) durch ein zusätzliches Befestigungsmittel (10') verbunden ist.

3. Vorrichtung nach Anspruch 2, **dadurch gekennzeichnet, dass** die Gelenkverbindung (11) das zusätzliche Befestigungsmittel (10') des oder jedes Ablenkers (9) mit dem Rahmen (3) bildet.

4. Vorrichtung nach einem der Ansprüche 1 bis 3, **dadurch gekennzeichnet, dass** der oder jeder Ablenker (9) aus einem gekrümmten Körper (9') besteht, wobei die oder jede Gelenkverbindung (11) in der Nähe eines der zwei Enden des Körpers (9') angeordnet ist.

5. Vorrichtung nach Anspruch 4, **dadurch gekennzeichnet, dass** sich das erste Befestigungsmittel (10) in der Nähe des anderen der zwei Enden des Körpers (9') des oder jedes Ablenkers (9) in Bezug auf die Gelenkverbindung (11) befindet.

6. Vorrichtung nach einem der Ansprüche 1 bis 5, **dadurch gekennzeichnet, dass** sich die Gelenkverbindung (11) am unteren Ende des Körpers (9'), im montierten Zustand des berücksichtigten Ablenkers (9), befindet.

7. Vorrichtung nach irgendeinem der Ansprüche 1 bis 6, **dadurch gekennzeichnet, dass** die Gelenkverbindung (11) eine Drehgelenkverbindung mit einer Drehachse (AP) ist, die im Wesentlichen parallel zur Längsachse (AL) des Rotors (5) ausgerichtet ist.

8. Vorrichtung nach einem der Ansprüche 1 bis 7, **dadurch gekennzeichnet, dass** die Drehachse (AP) der Gelenkverbindung (11) des oder jedes berücksichtigten Ablenkers (9) von einer Stange (15) gebildet wird, die in einem Lager (P) aufgenommen ist.

9. Vorrichtung nach einem der Ansprüche 1 bis 8, **dadurch gekennzeichnet, dass** der oder jeder berücksichtigte Ablenker (9) ein bewegliches Teil (8), das einstückig mit einer Stange (15) gebildet ist, umfasst, das ausgestaltet ist, um mit dem Rahmen (3) der Vorrichtung (2) durch eine Gelenkverbindung (11) verbunden zu werden, deren Drehachse (AP) von der oben genannten Stange (15) gebildet wird und die dem beweglichen Teil (8) mindestens eine Drehbewegung erlaubt, die eine Freisetzung in Bezug auf den Rotor (5) der Vorrichtung (2) nach sich zieht.

10. Landwirtschaftliche Maschine (1) zur Verarbeitung von gemähtem Pflanzengut, insbesondere Erntemaschine, **dadurch gekennzeichnet, dass** sie mindestens eine Aufnahmevorrichtung (2) nach irgendeinem der Ansprüche 1 bis 9 umfasst.

11. Verfahren zur mindestens teilweisen Freisetzung eines länglichen Rotors (5) einer Aufnahmevorrichtung (2) einer landwirtschaftlichen Maschine (1) zur Verarbeitung von gemähtem Pflanzengut, wobei die Aufnahmevorrichtung (2) einerseits einen Rahmen (3) und einen Rotor (5) umfasst, der in Bezug auf den Rahmen (3) um eine Längsachse (AL) in Drehung versetzt werden kann, wobei eine Vielzahl von Rechfingern (7), in Gruppen von drei oder mehr angeordnet, auf dem Rotor (5) montiert sind, wobei sich jede Gruppe von Fingern (7) in einer eigenen Ebene (PP) senkrecht zur Längsachse (AL) befindet, wobei diese unterschiedlichen Ebenen (PP) entlang der Längsachse (AL) angeordnet sind, und andererseits eine Vielzahl von Ablenkern (9), die sich mindestens teilweise um den Rotor (5) erstrecken und gemäß der Richtung der Längsachse (AL) beabstandet sind, wobei der Abstand zwischen zwei benachbarten Ablenkern (9) für den Durchgang der Finger (7) einer Gruppe bei der Drehung des Rotors (5) angepasst ist und die Ablenker (9), in montiertem Zustand, mit dem Rahmen (3) mittels mindestens eines ersten Befestigungsmittels (10) verbunden sind, wobei das Verfahren **dadurch gekennzeichnet ist, dass** es darin besteht, um den Rotor (5) mindestens teilweise freizusetzen, das mindestens erste Befestigungsmittel (10) loszulösen, dann das mindestens eine bewegliche Teil (8) beziehungsweise die Gesamtheit mindestens eines Ablenkers (9) um eine Gelenkverbindung (11) zu drehen, die diesen Ablenker mit dem Rahmen (3) verbindet, was eine Freisetzung in Bezug auf den Rotor (5) nach sich zieht, sodass sich der oder jeder betroffene Ablenker (9) in mindestens einem freigesetzten Zustand befindet, in dem sich das bewegliche Teil (8) in einer Position stabilen Gleichgewichts befindet.

12. Freisetzungsverfahren nach Anspruch 11, **dadurch gekennzeichnet, dass** das mindestens eine bewegliche Teil (8) beziehungsweise der gesamte Körper (9') mindestens eines Ablenkers (9) nach unten gedreht wird, um den Rotor (5) freizusetzen.

13. Freisetzungsverfahren nach einem der Ansprüche 11 oder 12, **dadurch gekennzeichnet, dass**, um den maximal freigesetzten Zustand eines Ablenkers (9) zu erreichen, sein bewegliches Teil (8) oder sein gesamter Körper (9') gemäß einem Winkel gedreht wird, der zwischen 45° und 250° beträgt, besonders bevorzugt zwischen 60° und 180°.

## Claims

1. Collecting device (2) comprising, on the one hand, a frame (3) and an elongated rotor (5) guided in rotation relative to the frame (3) about a longitudinal axis (AL), a plurality of raking tines (7) arranged in groups of three or more being mounted on the rotor (5), each group of tines (7) being located in an own plane (PP) perpendicular to the longitudinal axis (AL), these different planes (PP) being arranged along the said longitudinal axis (AL), and, on the other hand, a plurality of deflectors (9) extending at least partially around the rotor (5) and spaced out in the direction of the longitudinal axis (AL), the spacing between two adjacent deflectors (9) being adapted for the passage of the tines (7) of a group during the rotation of the rotor (5), and the said deflectors (9) in a mounted state being connected to the frame (3) by means of at least one first means of attachment (10), at least one movable part (8) of at least one of the deflectors (9) being connected to the frame (3), respectively to a fixed part (8') of a deflector (9), by means of an articulated connection (11) which allows the said movable part (8) at least a swiveling movement inducing a disengagement in relation to the rotor (5),
collecting device (2) **characterized in that** the said articulated connection (11) is arranged and configured in such a manner that following detachment of the first means of attachment (10), at least the movable part (8) of the deflector (9) in question can be swiveled about a swivel axis (AP) so that the or each deflector (9) in question is at least in a disengaged state, in which the movable part (8) is in a stable position of equilibrium.

2. Device according to claim 1, **characterized in that** the or each deflector (9) is moreover connected to the frame (3) by an additional means of attachment (10').

3. Device according to claim 2, **characterized in that** the articulated connection (11) forms the additional means of attachment (10') of the or each deflector (9) to the frame (3).

4. Device according to one of claims 1 to 3, **characterized in that** the or each deflector (9) consists of a curved body (9'), the or each articulated connection (11) being located in the proximity of one of the two ends of the said body (9').

5. Device according to claim 4, **characterized in that** the first means of attachment (10) is located in the proximity of the other of the two ends of the body (9') of the or each deflector (9), in relation to the articulated connection (11).

6. Device according to one of claims 1 to 5, **characterized in that** the articulated connection (11) is located at the lower end of the body (9'), in the mounted state of the deflector (9) in question.

7. Device according to any one of claims 1 to 6, **characterized in that** the articulated connection (11) is a swivel connection with a swivel axis (AP) substantially oriented parallel to the longitudinal axis (AL) of the rotor (5).

8. Device according to one of claims 1 to 7, **characterized in that** the swivel axis (AP) of the articulated connection (11) of the or each deflector (9) in question is formed by a rod (15) housed in a bearing (P).

9. Device according to one of claims 1 to 8, **characterized in that** the or each deflector (9) in question comprises a movable part (8) with a one-piece rod (15) and configured to be connected to the frame (3) of the said device (2) by an articulated connection (11) the swivel axis (AP) of which is formed by the aforementioned rod (15) and which allows a swiveling motion of the said movable part (8) leading to disengagement from the rotor (5) of the said device (2).

10. Agricultural machine (1) for treating cut plants, in particular a harvesting machine, **characterized in that** it comprises at least one collecting device 2 according to any one of the claims 1 to 9.

11. Method of at least partial disengagement of an elongated rotor (5) of a collecting device (2) of an agricultural machine (1) for treating cut plants, the said collecting device (2) comprising, on the one hand, a frame (3) and a rotor (5) able to be driven in rotation in relation to the frame (3) about a longitudinal axis (AL), a plurality of raking tines (7) arranged in groups of three or more being mounted on the rotor (5), each group of tines (7) being located in an own plane (PP) perpendicular to the longitudinal axis (AL), these different planes (PP) being arranged along the said longitudinal axis (AL), and, on the other hand, a plurality of deflectors (9) extending at least partially around the rotor (5) and spaced out in the direction of the longitudinal axis (AL), the spacing between two adjacent deflectors (9) being adapted for the passage of the tines (7) of one group during the rotation of the rotor (5), and in the mounted state, the said deflectors (9) being connected to the frame (3) by means of at least a first means of attachment (10), method **characterized in that** to at least partially disengage the rotor (5), it consists of detaching the said at least first means of attachment (10), to then swivel the said at least one movable part (8), respectively the whole, of at least one deflector (9) about an articulated connection (11) connecting this deflector to the frame (3), inducing a disengagement from the rotor (5) so that each deflector (9) in question is at least in a disengaged state, in which the movable part (8) is in a stable position of equilibrium.

12. Method for disengagement according to claim 11, **characterized in that** the at least one movable part (8), respectively the entirety of the body (9'), of at least one deflector (9), is swiveled downwards to disengage the rotor (5).

13. Method for disengagement according to one of claims 11 or 12, **characterized in that**, to achieve the maximum disengaged state of a deflector (9), its movable part (8), or the entirety of its body (9'), is swiveled at an angle of between 45° and 250°, more preferably between 60° and 180°.
